# EUROPEAN PATENT SPECIFICATION

(11) **EP 0 611 810 B1**
(45) Date of publication and mention of the grant of the patent: **27.10.1999**
(21) Application number: 94102425.9
(22) Date of filing: 17.02.1994
(51) Int. Cl.: C09D 5/08

(54) **Organic composite coated steel strip having improved electrocoating properties and corrosion resistance and method for making**
Mit einem organischen Schichtstoff beschichteter Stahlstreifen mit verbesserten Elektrobeschichtungseigenschaften und Korrosionsbeständigkeit sowie Verfahren zur Herstellung
Bande d'acier revêtue d'une couche organique apte au revêtement électrolytique et résistante à la corrosion et méthode de préparation

(30) Priority: 17.02.1993 JP 2826393; 09.07.1993 JP 17027893; 13.07.1993 JP 17305993
(43) Date of publication of application: 24.08.1994
(73) Proprietor: KAWASAKI STEEL CORPORATION, Chuo-Ku, Kobe-Shi Hyogo-Ken (JP); DAI NIPPON TORYO CO., Ltd., Osaka-shi, Osaka-fu (JP)
(72) Inventor: Hamahara, Kyoko, c/o Technical Res. Div. of, Chiba-shi, Chiba-ken (JP); Sujita, Shigeko, c/o Technical Res. Div. of, Chiba-shi, Chiba-ken (JP); Muko, Ryoichi, c/o Technical Res. Div. of, Chiba-shi, Chiba-ken (JP); Mochizuki, Kazuo, c/o Technical Res. Div. of, Chiba-shi, Chiba-ken (JP); Morito, Nobuyuki, c/o Technical Res. Div. of, Chiba-shi, Chiba-ken (JP); Tanabe, Hiroyuki, c/o Dai Nippon Toryo Co., Ltd., Otawara-shi, Tochigi-ken (JP); Nagai, Masanori, c/o Dai Nippon Toryo Co., Ltd., Otawara-shi, Tochigi-ken (JP); Ogawa, Osamu, c/o Dai Nippon Toryo Co., Ltd., Otawara-shi, Tochigi-ken (JP); Kato, Nobuyoshi, c/o Dai Nippon Toryo Co., Ltd., Otawara-shi, Tochigi-ken (JP)
(74) Representative: Henkel, Feiler, Hänzel

## Description

### BACKGROUND OF THE INVENTION

This invention relates to organic composite coated steel strips for main use as automotive body steel strips and more particularly, organic composite coated steel strips having improved electrocoating properties, especially image clarity after electrocoating as well as rust prevention, corrosion resistance, and spot weldability.

Supply of various surface treated steel strips is increasing in these years in order to meet the strong social demand for enhanced corrosion resistance of automotive bodies. Typical of such surface treated steel strips are zinc plated and zinc base alloy plated steel strips (which are often referred to simply as zinc plated steel strips, hereinafter). Since paint cannot spread to every detail upon coating at the end of vehicle body assembly, steel strips are required to have higher corrosion resistance especially at hollow structures and hemmed edges within the body interior which will be exposed to high humidity.

One type of steel strip meeting such a demand is proposed in Japanese Patent Application Kokai (JP-A) Nos. 130141/1991 and 258335/1990. Disclosed therein are organic composite coated steel strips based on a zinc plated steel strip and having thereon a chromate layer and an organic resin layer containing silica. Since these organic composite coated steel strips are fully corrosion resistant even without paint coating at the end of vehicle body assembly, they are frequently used in the body interior.

The situation differs at the automotive body exterior or surface side. The exterior is subject to lower humidity than the interior. Paint coating at the end of vehicle body assembly can spread over the entire surface to a thickness of about 100 µm (electrocoating plus intermediate coating plus overcoating). The likelihood that rust on the exterior side penetrate throughout the wall is less than on the interior side. For these reasons, steel strips are conventionally used with their cold rolled surface at the body exterior side. As corrosion resistance requirements for automobile bodies become severer, rust prevention requirements at the body exterior side also become severer. Then steel strips which are also surface treated on the exterior side are now in practical use. For example, steel strips surface treated by zinc plating are used in practice because they exhibit greater rust prevention than cold rolled steel strips.

Nevertheless, zinc plated steel strips are less satisfactory in plating adherence and thus less resistant against low-temperature chipping. When paint is coated onto the zinc plating, stresses are applied from the thick coating to the plating. The automobile exterior can be hit by pebbles or other foreign objects during automobile drive and the plating layer can be stripped or chipped by such impact. These conditions prevent the zinc plating from exerting sacrificial rust prevention and allow the exterior rust to propagate. It was thus proposed to additionally apply to the exterior side an organic composite coating having higher low-temperature chipping resistance and external rust prevention than zinc plated steel strips as disclosed in JP-A 027536/1992 and 026775/1992.

Aesthetic appearance is of more importance on the exterior than the interior of automobiles, and evaluation method and criterion are different between the exterior and the interior. Under the background that higher grades are favored in accordance with the living standard level-up, the severer criterion of outer appearance evaluation, coupled with the advance of processing techniques, calls for use of laser dull cold rolled steel strips which are temper rolled by rolls formed with a regular dull pattern by laser beams and laser dull zinc plated steel strips which are obtained by adding zinc plating to the former ones.

The aforementioned organic composite coated steel strips are satisfactory in low-temperature chipping resistance and external rust prevention, but have some problems associated with electrocoating or electrodeposition. There are electrodeposited on these steel strips paint coatings which are free of gas pinholes and craters which are traces of hydrogen gas evolved during electrocoating, but are uneven and have an extremely irregular surface, known as orange peel. Even when not so worse as orange peel, some electrodeposited paint coatings have a surface which is more irregular and uneven than the conventional cold rolled steel strips and zinc plated steel strips which are for exterior use in the prior art. These coatings are low in image clarity and cannot clear the strict outer appearance evaluation criterion.

The image clarity was conventionally evaluated only by observing the aesthetic appearance. In conjunction with a demand for a strict judgment criterion as mentioned above, the image clarity is now numerically judged in terms of a PGD value as measured by a PGD meter (Portable Distinctness of Image Gloss meter). According to our empirical measurements, the orange peel surface has a PGD value of 0.2 or lower and the cold rolled steel strips and zinc plated steel strips have a PGD value of 0.4 to 0.6. Then many electrodeposited coatings are not so poor as orange peel, but few can clear the same level of image clarity as the cold rolled steel strips and zinc plated steel strips.

Attempts to improve the electrocoating properties of organic composite coated steel strips are disclosed in JP-A 283161/1987 and 035798/1988. On the chromate coating is applied a solvent type coating composition comprising a binder resin, silica (having a small particle size of 1 to 100 nm for the purposes of bare corrosion resistance and coating smoothness), a hydrophilic polyamide resin, and polyethylene wax. This coating eliminates the defects associated with electrocoating including orange peel and pinholes or craters which are traces of hydrogen gas given off during electrocoating, but cannot satisfy the image clarity criterion required for exterior use and equivalent to the cold rolled steel strips and zinc plated steel strips. Still worse, the coating composition is too viscous to delicately control the coating thickness. It is not commercially acceptable to use a large amount of expensive polyamide resin. One improvement in this regard is proposed in JP-A 269067/1991 and 268939/1991 wherein a polyamine and/or polyimine resin is used instead of the polyamide resin. This coating eliminates the defects associated with electrocoating including orange peel and pinholes or craters which are traces of hydrogen gas evolved during electrocoating, but still cannot satisfy the current image clarity criterion required for exterior use.

These prior art techniques use silicas for the purpose of improving electrocoating properties or electrodeposition susceptibility. All these silicas are microparticulate silicas having a particle size of 1 to 100 nm from the standpoints of electrocoating properties and bare corrosion resistance. However, since requirements on the automotive body exterior side are different from those on the interior side as previously mentioned, corrosion resistance and outer appearance after triple coating are important on the exterior rather than bare corrosion resistance. When microparticulate silica is used, probably because fewer conduction points are available during electrocoating as will be described later, more amounts of polyamide, polyamine or polyimine resin must be added in order to improve electrocoating properties. Using a large amount of expensive polyamide, polyamine or polyimine resin is undesirable. Still worse, these resins possess many hydrophilic groups which adversely affect the wet adhesion after triple coating, resulting in a loss of performance.

### SUMMARY OF THE INVENTION

The present invention intends to solve the problems of the prior art techniques including electrocoating properties, wet adhesion, and spot weldability. An object of the present invention is to provide an organic composite coated steel strip having improved electrocoating properties, especially in terms of image clarity, equivalent to the conventional cold rolled steel strips and zinc plated steel strips while maintaining improved rust prevention and low-temperature chipping resistance.

In general, organic composite coated steel strips for automotive body exterior use have better rust prevention and low-temperature chipping resistance than the conventional cold rolled steel strips and zinc plated steel strips, but suffer from electrocoating properties, especially in terms of image clarity. By selecting suitable ones from various types of resin and silica, we attempted to improve the electrocoating properties, especially image clarity of organic composite coated steel strips without detracting from the wet adhesion.

The present invention provides an organic composite coated steel strip having improved electrocoating properties and corrosion resistance, comprising a zinc or zinc base alloy plated steel strip, a chromate coating on the plated steel strip having a weight of 5 to 500 mg/m² calculated as chromium, and a resin coating on the chromate coating having a dry weight of 0.1 to 3 g/m². The resin coating has a composition comprising (A) silica particles, (B) a binder resin, and (C) 1 to 10% by weight of at least one resin selected from the group consisting of a polyamide resin, polyamine resin, and polyimine resin. The silica particles (A) have an average primary particle size of 5 to 30 nm and are agglomerated in the resin coating to form laminar or planar aggregates having an average thickness of 0.2 to 2 µm (= 200 to 2000 nm) and an average diameter of 5 to 300 µm.

Preferably the organic composite coated steel strip defined above is prepared by any of the following two methods.

The method includes the steps of forming a chromate coating on a zinc or zinc base alloy plated steel strip in a weight of 5 to 500 mg/m² calculated as chromium, and applying a coating composition to the chromate coating, followed by drying to form a resin coating having a dry weight of 0.1 to 3 g/m². In a first method, the coating composition contains (A) chain-linked fumed silica having an average primary particle size of 5 to 30 nm and being agglomerated to form a chain link having an average length of at least 0.1 µm (= 100 nm), (B) a binder resin, and (C) at least one additional resin selected from the group consisting of a polyamide resin, polyamine resin, and polyimine resin.

In a second method, the coating composition contains (A) an organic solvent dispersed silica sol having an average primary particle size of 5 to 30 nm and being agglomerated to form aggregates having an average diameter of 100 to 2,000 nm (= 0.1 to 2 µm) and a specific surface area of 50 to 800 m²/g, (B) a binder resin, and (C) at least one additional resin selected from the group consisting of a polyamide resin, polyamine resin, and polyimine resin.

In a preferred embodiment of either of these methods, the coating composition contains the binder resin (B) and the additional resin (C) in a total amount of 40 to 90% by weight of the solids content and the chain-linked fumed silica or silica sol (A) in an amount of 60 to 10% by weight of the solids content.

More preferably, the coating composition contains the binder resin (B) and the additional resin (C) in a total amount of 40 to 90% by weight of the solids content and the chain-linked fumed silica or silica sol (A) in an amount of 60 to 10% by weight of the solids content while the content of the additional resin (C) is 1 to 10% by weight of the solids content.

It is preferred from the standpoint of rust prevention to use as the binder resin a composition comprising (1) 100 parts by weight of a modified epoxy resin which is obtained by adding a dialkanolamine to an epichlorohydrin-bisphenol A type epoxy resin having an epoxy equivalent of 500 to 5,000 in an amount of 0.8 to 1.0 mol per equivalent of the epoxy group in the epoxy resin, (2) 0.5 to 10 parts by weight of a silane coupling agent per 100 parts by weight of the modified epoxy resin, and (3) 5 to 70 parts by weight of an amino resin per 100 parts by weight of the modified epoxy resin.

It is also preferred from the standpoint of rust prevention to use as the binder resin a modified epoxy resin which is obtained by reacting 100 parts by weight of an epichlorohydrin-bisphenol A type epoxy resin with 10 to 100 parts by weight of an isocyanate compound to form a urethane-modified epoxy resin having an epoxy equivalent of 1,000 to 5,000 and adding a dialkanolamine to the urethane-modified epoxy resin in an amount of 0.5 to 1.0 mol per equivalent of the epoxy group in the urethane-modified epoxy resin.

### BRIEF DESCRIPTION OF THE DRAWING

The present invention will be better understood by reading the following description of preferred embodiments taken in conjunction with the drawing.

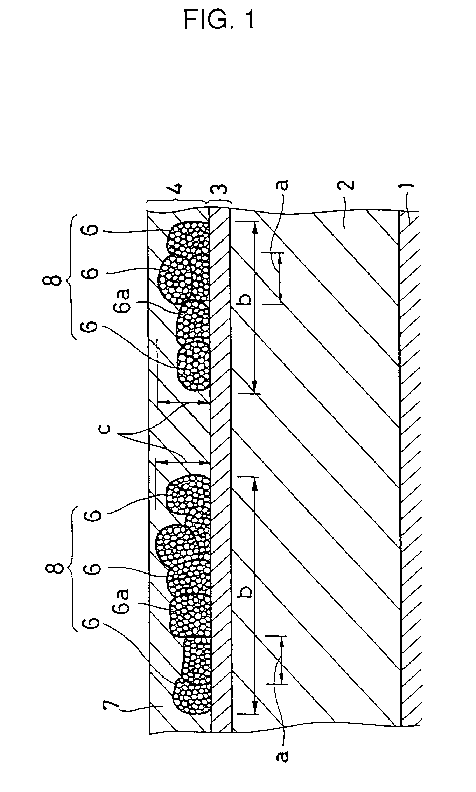

The only figure, FIG. 1 is a schematic cross-sectional view of an organic composite coated steel strip, showing the distribution of secondary aggregates of silica in the organic resin layer.

### DETAILED DESCRIPTION OF THE INVENTION

The starting stock material is zinc plated strip steel or zinc base alloy plated strip steel, which are often referred to simply as zinc plated strip steel. The types of plating applied to steel substrates include all conventional zinc platings used for anti-corrosion purpose, for example, pure zinc plating, binary alloy platings such as Zn-Ni, Zn-Fe and Zn-Cr alloy platings, and ternary alloy platings such as Zn-Ni-Cr and Zn-Co-Cr alloy platings. In addition, composite dispersion platings as typified by Zn-SiO₂ and Zn-Co-Cr-Al₂O₃ platings are acceptable. These zinc platings may be applied by electroplating, hot dipping or gas phase plating. The zinc platings are applied to steel substrates in ordinary coating weights for imparting corrosion resistance thereto. That is, the coating weight of zinc plating is not critical insofar as its purpose is achievable.

The zinc plated steel substrate is subjected to chromate treatment for imparting high corrosion resistance and for enhancing adherence or receptivity to an overlying organic resin coating. The chromate layer is coated in a weight of 5 to 500 mg/m², preferably 10 to 150 mg/m² calculated as elemental chromium. If the chromium coating weight is less than 5 mg/m², some substrate areas can be left uncoated, which is undesirable for corrosion resistance and coating adherence. In excess of 500 mg/m², no further improvement in corrosion resistance is expectable and insulating film resistance is increased to such an extent as to deter spot welding.

The chromate treatment may be conducted by any conventional techniques including coating chromate techniques using a roll coater, roll squeezer or the like, electrolytic chromate techniques, and reactive chromate techniques.

On the chromate coating is applied a composite coating composed mainly of (A) silica and (B) an organic polymer resin or binder. The binder resin used herein is not critical although it is preferably selected from modified epoxy resins, urethane resins, acrylic resins, phenolic resins, and alkyd resins. A mixture of such resins is also useful. A resin composition based on an epichlorohydrin-bisphenol A type epoxy resin is desirable from the standpoints of toughness and corrosion resistance.

In one preferred embodiment, the binder resin is a composition comprising 100 parts by weight of a modified epoxy resin, 0.5 to 10 parts by weight of a silane coupling agent per 100 parts by weight of the modified epoxy resin, and 5 to 70 parts by weight of an amino resin per 100 parts by weight of the modified epoxy resin. The modified epoxy resin used herein is obtained by adding a dialkanolamine to an epichlorohydrin-bisphenol A type epoxy resin having an epoxy equivalent of 500 to 5,000 in an amount of 0.8 to 1.0 mol per equivalent of the epoxy group in the epoxy resin.

Epoxy resins with an epoxy equivalent of less than 500 are naturally too low in molecular weight and have low alkali resistance and low coating adherence after electrocoating. With an epoxy equivalent of more than 5,000, the amount of dialkanolamine to be added to epoxy groups would be reduced so that the epoxy resin becomes short in both reinforcement with silica and low-temperature curing with the amino resin, also resulting in low coating adherence after electrocoating. If the amount of dialkanolamine added is less than 0.8 mol per equivalent of the epoxy group, then the modified epoxy resin would achieve less reinforcement with silica and thus allow the coating to be swollen by high alkali at the interface during electrocoating, indicating low coating adherence. If the amount of dialkanolamine added exceeds 1.0 mol per equivalent of the epoxy group, then some extra dialkanolamine does not participate in reinforcement with silica, which is not only economically undesirable, but is left in the coating as an unreacted component to detract from corrosion resistance.

The silane coupling agent is added for the purpose of improving the adhesion between the resin and the chromate layer. Less than 0.5 parts of the silane coupling agent per 100 parts by weight of the modified epoxy resin would not be effective for the purpose whereas more than 10 parts of the silane coupling agent would leave some unreacted portion which can cause poor adhesion.

The amino resin serves as a crosslinking agent by undergoing dehydration condensation reaction with hydroxyl groups of the modified epoxy resin, thereby forming a more rigid and dense coating and imparting water resistance and alkali resistance. Less than 5 parts of the amino resin per 100 parts by weight of the modified epoxy resin would be too small amounts to induce resin curing whereas more than 70 parts of the amino resin would leave some unreacted portion, especially in the case of low-temperature baking, which can cause poor adhesion.

Another preferred binder resin capable of imparting high corrosion resistance is a modified epoxy resin which is obtained by reacting 100 parts by weight of an epichlorohydrin-bisphenol A type epoxy resin with 10 to 100 parts by weight of an isocyanate compound to form a urethane-modified epoxy resin having an epoxy equivalent of 1,000 to 5,000 and adding a dialkanolamine to the urethane-modified epoxy resin in an amount of 0.5 to 1.0 mol per equivalent of the epoxy group in the urethane-modified epoxy resin. Less than 10 parts of the isocyanate compound per 100 parts by weight of the epoxy resin would be insufficient to provide workability and a high molecular weight and thus fail to achieve alkali resistance, allowing leaching and soft swelling of the coating during electrocoating and thus failing to provide coating adherence after electrocoating. More than 100 parts of the isocyanate compound per 100 parts by weight of the epoxy resin would increase the resin molecular weight too much, which naturally results in a coating composition with increased viscosity which is not convenient to coat. With respect to the remaining factors, the reason of limitation is the same as above.

In addition to the binder resin (B), the resin coating according to the present invention contains an additional resin component (C) which is selected from the group consisting of a polyamide resin, a polyamine resin, a polyimine resin, and mixtures thereof. Electrocoating properties are significantly improved by addition of the additional resin (C). Any of polyamide, polyamine, and polyimine resins may be used herein insofar as it has an amido and/or amino group.

The additional resin (C) is added in an effective amount to improve electrocoating properties. That is, the dry weight of the additional resin is 1 to 10% by weight of the dry weight of the overall resin coating. Less than 1% by weight of the additional resin is not effective for its purpose, with the image clarity after electrocoating not clearing the required criterion. Especially when 3% by weight or more of the additional resin is present, organic composite coated steel strips having fully improved electrocoating properties are expectable. As the amount of the additional resin increases, electrocoating properties are improved. More than required amounts of the additional resin would provide no further improvement in electrocoating properties, be economically disadvantageous, and rather detract from wet adhesion (or paint secondary adherence). Although the reason of improvement in electrocoating properties by the additional resin is not well understood, it is probably because the additional resin has many hydrophilic groups allowing electrocoating solution to readily penetrate into the resin coating and thus presenting more electric conduction points. Resin coatings containing the additional resin in a higher proportion are more hydrophilic, allow fast penetration of water and are thus low in wet adhesion. It is thus desired to limit the content of the additional resin to 10% by weight or less.

The electrocoating properties, especially image clarity after electrocoating which the present invention intends to improve are enhanced by a combination of the additional resin (polyamide, polyamine and/or polyimine resin) with agglomerated silica. When silica uniformly dispersed in an organic solvent was used, even in combination with the additional resin, the image clarity after electrocoating could not reach a satisfactory level equivalent to the conventional cold rolled steel strips and zinc plated steel strips. Still worse, when a binder resin dissolved in an organic solvent was mixed with the additional resin and silica which would be uniformly dispersed in the organic solvent, the resulting coating composition had increased viscosity and was difficult to delicately control the coating thickness.

Although the reason of improvement in electrocoating properties by the additional resin is not well understood, it is probably because the additional resin (polyamide, polyamine, and/or polyimine resin) allows electrocoating solution to readily penetrate into the resin coating, thus presenting more electric conduction points during electrocoating. Since silica itself and the resins themselves are substantially non-conductive, electric conduction takes place by virtue of water passing through the resin coating. While silica itself conducts no electricity, silanol groups around silica are highly hygroscopic and can present conduction points during electrocoating. However, since the silanol groups are normally surrounded by the binder resin, it is unlikely that they form continuous paths for water from the coating surface to the deep inside. When the additional resin having amido and/or amino groups is introduced, the amido and amino groups which tend to bond with silanol groups prevail around silica and form continuous paths for water from the coating surface to the deep inside. As a result, there are available many conduction points during electrocoating, leading to improved electrocoating properties.

If silica particles are agglomerated in laminar or planar aggregates in the resin coating, then silica particles form some paths therebetween due to silanol groups. In this state, the addition of the additional resin (polyamide, polyamine, and/or polyimine resin) ensures sufficient distribution of conduction points, contributing to an improvement in electrocoating properties. If silica particles are uniformly dispersed in the resin coating, there are few continuous paths formed by silanol groups. In this state, the addition of the additional resin does not contribute to an improvement in electrocoating properties. Silica particles are covered with silanol groups at their surface as previously mentioned. Since these silanol groups are likely to bond with amido and/or amino groups of the additional resin, the silica particles are surrounded by the additional resin and connected each other by the additional resin. Once the silanol groups at the silica outer surface have bonded with amido and/or amino groups of the additional resin, an extra of the additional resin left behind is present in a free state in the resin coating and forms paths for water which improve electrocoating properties. If silica particles do not form aggregates, the silica surface area is increased. Then the amount of silanol group per coating unit is increased while the amount of the additional resin present in a free state is reduced. Then more amounts of the additional resin must be used in order to achieve a significant improvement in electrocoating properties. This is economically undesirable since the additional resin is expensive. Using more amounts of the additional resin is also disadvantageous in performance in that the resulting resin coatings are more hydrophilic, allow fast penetration of water and are thus low in wet adhesion as previously described.

Use of microparticulate silica is undesirable in that the coating composition becomes too viscous and deters efficient application. It is believed that silica particles which do not form aggregates are interconnected or bound by the resins to cause a viscosity increase.

For the above-mentioned reasons, it is desired in the present invention that silica particles have an average primary particle size of 5 to 30 nm and they are agglomerated in the resin coating to form laminar or planar aggregates having an average thickness of 0.2 to 2 µm and an average diameter of 5 to 300 µm.

Referring to FIG. 1, there is schematically illustrated in cross section a portion of an organic composite coated steel strip according to the present invention. FIG. 1 is to particularly illustrate the state of silica particles present in the resin coating. In the agglomerated state, silica particles form ellipsoidal, network or band-shaped laminar aggregates. In FIG. 1, there are shown a steel strip 1, a zinc or zinc base alloy plating layer 2, a chromate layer 3, and an organic resin layer 4. The resin layer 4 is based on an organic resin matrix 7 which is a mixture of the binder resin and the additional resin defined above. Within the resin matrix 7, primary particles 6a of silica are agglomerated to form primary flocs 6 of silica which are further agglomerated to form secondary aggregates 8 of silica. It is these secondary aggregates 8 what is called laminar aggregates in the present invention. The silica particles 6a have a primary particle size while the primary flocs 6 have an average diameter a and the laminar aggregates 8 have an average diameter b and an average thickness c as shown in the figure.

Silica particles having an average primary particle size of less than 5 nm agglomerate to an excessive extent in the coating composition so that it is quite difficult to keep particles stable at an adequate aggregate size to prepare the coating composition or to apply it to the steel strip. With an average primary particle size of greater than 30 nm, there are unavailable silanol groups necessary to contribute to corrosion resistance. For this reason, silica particles in the organic resin layer should have an average primary particle size between 5 nm and 30 nm.

In the organic resin layer according to the invention, silica particles are agglomerated into laminar or planar aggregates having an average thickness c of 0.2 to 2 µm and an average diameter b of 5 to 300 µm as shown by dimensions c and b in FIG. 1. If silica uniformly dispersed in an organic solvent is used, the silica particles are not agglomerated into secondary aggregates, but are kept uniformly dispersed in the organic resin layer. In this case, the image clarity after electrocoating could not reach a satisfactory level equivalent to the conventional cold rolled steel strips and zinc plated steel strips, even in the co-presence of the additional resin in the organic resin layer. Still worse, when a binder resin dissolved in an organic solvent was mixed with the additional resin and the silica which would be uniformly dispersed in the organic solvent, the resulting coating composition had increased viscosity and was difficult to delicately control the coating thickness.

If the laminar aggregates have an average thickness of less than 0.2 µm, there occurs a phenomenon similar to that occurring with uniformly dispersed silica particles, resulting in insufficient improvement in image clarity after electrocoating. If the aggregate average thickness exceeds 2 µm, no further improvement in image clarity after electrocoating is expected and the silica aggregates can emerge from the organic resin layer. Emergent silica aggregates deter formation of a uniform coating and reduce image clarity after electrocoating. They also deteriorate spot weldability by noticeably increasing the electric resistance between an electrode and the steel strip during spot welding, causing welding sparks to generate, and promoting damage to the electrode.

If the laminar aggregates have an average diameter of less than 5 µm, there occurs a phenomenon similar to that occurring with uniformly dispersed silica particles, resulting in insufficient improvement in image clarity after electrocoating. If the aggregate average diameter exceeds 300 µm, the electric resistance of silica aggregates becomes a problem while that portion of the organic resin layer which is short of silica is increased in area so that corrosion resistance is undesirably deteriorated. The term average diameter of laminar aggregates is an average of the major and minor diameters of ellipsoidal aggregates or an average of the width of network or band-shaped aggregates.

The buildup of the organic resin layer according to the invention is limited to 0.1 to 3 g/m² in dry weight. A resin coating with a buildup of less than 0.1 g/m² does not cover all the surface and is thus not satisfactory in improving rust prevention and low-temperature chipping resistance. A buildup of more than 3 g/m² provides an increased film resistance, detracting from spot weldability.

Any of silica stock materials may be used as silica in the present invention insofar as it can meet the above-defined particle size, form and distribution in the organic resin layer.

For example, hydrophobic fumed silica may be used as a silica stock material in the practice of the invention. Fumed silica particles may be either present as chain-like links or agglomerate to form agglomerates having an average agglomerate particle diameter of 0.1 to 2 µm. They are equally effective.

In one embodiment of the invention, the silica stock material used is chain-like linked fumed silica particles having an average primary particle size of 5 to 30 nm and linked like a chain to an average length of 0.1 µm or longer. Fumed silica is a silica produced by heat treatment from a vapor phase. An average primary particle size of less than 5 nm is undesirable because of low alkali resistance whereas in excess of 30 nm, there are available less silanol groups necessary to contribute to corrosion resistance. For this reason, the average primary particle size of silica used is limited to the range between 5 nm and 30 nm. With an average chain length of less than 0.1 µm, the effect of silica forming chains does not develop well, that is, the improvement in electrocoating properties is unsatisfactory. When a polyamide resin is added, such a short chain length allows the coating composition to increase its viscosity to make application difficult. Longer chains are usually acceptable, but too long chains would render the resin coating less workable. For this reason, chains or links of silica should desirably have an average length of 0.1 µm to 50 µm.

In the other embodiment of the invention, an organic solvent dispersed silica sol is used. It is generally obtained from water-dispersed silica sol by controlling the amount of alkali metal ions or polyvalent metal ions to adjust the charge state of the sol at the surface so as to incur secondary agglomeration and substitution dispersing in an organic solvent such as butanol, xylene, ethylene glycol monoethyl ether, ethylene glycol monobutyl ether, ethylene glycol monopropyl ether.

More particularly, the silica sol dispersed in an organic solvent as used herein should have an average primary particle size of 5 to 30 nm and be agglomerated to form aggregates having an average diameter of 100 to 2,000 nm (= 0.1 to 2 µm) and a specific surface area of 50 to 800 m²/g. The silica aggregates include ellipsoidal laminar or planar aggregates and network or band-shaped laminar aggregates.

Silica particles having an average primary particle size of less than 5 nm agglomerate to an excessive extent in the coating composition so that it is quite difficult to keep particles stable at an adequate aggregate size to prepare the coating composition or to apply it to the steel strip. With an average primary particle size of greater than 30 nm, there are unavailable silanol groups necessary to contribute to corrosion resistance. For this reason, silica particles should have an average primary particle size between 5 nm and 30 nm. With an average aggregate diameter of less than 0.1 µm, the amount of silanol groups on the silica aggregate outermost surface per coating unit is increased and the silica agglomeration effect does not develop well, that is, the improvement in electrocoating properties is unsatisfactory. When an polyamide resin is added, such a small aggregate diameter allows the coating composition to increase its viscosity to make application difficult. An average aggregate diameter of more than 2 µm is undesirable from the standpoints of uniform electrodeposition and corrosion resistance because it becomes difficult to form a uniform resin coating. With a specific surface area of less than 50 m²/g, less silanol groups are available on the silica aggregate surface so that little water absorption by silanol groups is developed, resulting in poor electrocoating properties. With a specific surface area of more than 800 m²/g, the amount of silanol groups on the silica aggregate outermost surface per coating unit is increased, thus preventing the additional resin from improving electrocoating properties and causing the coating composition to increase its viscosity to deter its application.

Means for inducing secondary agglomeration is not particularly limited. One method is by reducing the content of alkali such as Na₂O in silica sol to less than 0.05% by weight. If Na₂O is contained in the silica sol, there is formed an electrical double layer in which Na⁺ coordinates on the silica particle surface as counter ions and a hydration layer surrounds them, so that repulsion between silica particles maintains a colloidal state and uniform dispersion, preventing secondary agglomeration. By limiting the Na₂O content in the silica sol to 0.05% by weight or less, formation of an electrical double layer on the silica surface to provide electric charges is prevented, allowing primary particles to agglomerate into secondary aggregates.

A second useful method is attachment of Al³⁺ to the silica surface. If Al³⁺ is attached to the silica surface in an amount of 0.1% by weight or more, calculated as Al, based on the total silica weight, for example, by adding basic aluminum chloride to silica sol, there result positively charged sites. Since the silica itself has a negative charge, the silica particles as a whole become neutral due to charge offsetting. However, attachment of Al³⁺ in an amount of more than 20% by weight, calculated as Al, based on the total silica weight causes undesirable displacement of corrosion resistance-improving silanol groups. By attaching Al³⁺ to the silica surface in an amount of 0.1 to 20% by weight of elemental aluminum based on the total silica weight, formation of an electrical double layer on the silica surface to provide electric charges is prevented, allowing primary particles to agglomerate into secondary aggregates.

The medium for silica sol dispersion is an organic solvent including ethylene glycol monoethyl ether, ethylene glycol monomethyl ether, and xylene. The concentration of silica sol in the organic solvent is not critical although it is generally about 15 to 40% by weight.

The coating composition should preferably contain silica such that on a dry basis, the dry weight of silica is 10 to 60% of the dry weight of the entire resin layer. A silica content of less than 10% by weight is undesirable from the standpoint of electrocoating properties because less silanol groups on silica aggregates provide less conduction points during electrocoating as mentioned previously. Less silanol groups provide less adhesion to the chromate layer, resulting in deterioration of wet adhesion. More than 60% by weight of silica is not compatible with the resin composition, which becomes difficult to apply to the steel strip.

Accordingly the total resin content, that is, the total of the binder resin and the additional resin selected from polyamide, polyamine and polyimine resins is 40 to 90% of the dry weight of the resin layer. The content of the additional resin is preferably 1 to 10% of the dry weight of the resin layer.

In addition to the essential components mentioned above, the coating composition for forming a composite coating according to the invention may contain a solvent, filler, curing agent, pigment, rust preventing agent, and dispersion stabilizer which are conventionally added to this type of coating composition.

According to the present invention, the organic composite coated steel strip or sheet is manufactured by cleaning a steel strip on the surface by pickling and degreasing, plating zinc or zinc base alloy thereto, then applying a chromate solution thereto, baking the coated strip at a maximum reach temperature of about 160°C to form a chromate layer, then applying a coating composition of the above-defined formulation thereto, and baking the coated strip at a maximum reach temperature of about 150°C to form an organic composite coating.

### EXAMPLE

Examples of the present invention are given below by way of illustration and not by way of limitation. Unless otherwise stated, all parts and percents are by weight.

### Examples 1-13 & Comparative Examples 1-11

Low carbon steel strips of 0.8 mm thick were pickled, degreased, plated with a zinc-nickel alloy (Ni content 12%) to a buildup of 30 g/m², coated with a chromate treatment solution having a Cr⁶⁺/total Cr ratio of 50% by means of a roll coater, and baked at a maximum reach temperature of 120°C to form a chromate layer. Then an organic composite coating composition was applied onto the chromate layer by means of a roll coater and baked at a maximum reach temperature of 160°C to form an organic composite coating.

The silicas in the coating compositions were chain-linked silica and agglomerated silica. Various parameters, composition and results of evaluation are reported in Table 1 for chain-linked silica and Table 2 for silica aggregates.

The test methods and evaluation methods are shown below.

### Chemical conversion treatment

Conventional alkali degreasing was followed by surface adjustment and phosphate treatment by immersing in SD2500 MZL (manufactured by Nippon Paint K.K.) for 2 minutes.

### Electrocoating

An electrocoat was applied by conducting electricity at a voltage of 250 volts for 180 seconds in an electrocoating solution U-53 (manufactured by Nippon Paint K.K.) at 28-30°C, and baking at 165°C for 20 minutes.

### Electrocoating properties

The organic composite coated steel strips were subjected to chemical conversion treatment and then electrocoating as mentioned above. Electrocoating properties were evaluated in terms of the presence of gas pinholes and craters in the electrocoat, the thickness of the electrocoat, and image clarity. The electrocoat was visually observed to see whether pinholes and craters were formed. The electrocoat thickness is regarded satisfactory when it is equivalent to the thickness of the Zn-Ni plating. Greater thickness is an economic loss. The image clarity is evaluated by applying polyester adhesive tape No. 31B (manufactured by Nitto Denko K.K.) to the electrocoated sample and measuring a PGD value by means of a portable distinctness of image gloss meter model PGD-IV (manufactured by Nippon Color Laboratory). It is to be noted that the PGD meter (Portable Distinctness of Image Gross meter) is a convenient meter for measuring the gloss of a coating surface as described in Automobile Technology, Vol. 141, No. 279 (1987), page 1394. The higher the PGD value, the better is the image clarity. Through empirical measurements we found that the orange peel surface which was a conventional criterion for evaluating electrocoating properties had a PGD value of 0.2 or lower. Electrocoats with PGD values of from 0.3 to less than 0.5 are not regarded orange peel, but some irregularities are observed on the surface. An electrocoat with a PGD value of 0.5 is uniform so that it may faithfully reflect the topography of the underlying base. Since the PGD value desired for Zn-Ni alloy-plated steel strip varies between 0.4 and 0.6 depending on electrocoating conditions, the acceptable criterion of image clarity is in the range of 0.4 to 0.6. PGD values of 0 to 0.2 represent orange peel.

### Low-temperature chipping resistance

After the organic composite coated steel strips were subjected to chemical conversion treatment and electrocoating as mentioned above, they were spray coated with an intermediate coat (TO-4830 by Nippon Paint K.K.) to a thickness of 40 µm and a topcoat (TO-4640-2 by Nippon Paint K.K.) to a thickness of 40 µm, both the coats being for automotive use. The samples were subjected to a diamond shot test under the following conditions. The test was followed by an adhesive tape strip test. Evaluation was made by measuring stripped coating areas at 10 shots and summing them.

| Diamond shot test | |
|---|---|
| Diamond shot | 10 mg |
| Temperature | -20°C |
| Shot speed | 210 km/hr. |

Note that the shot speed of 210 km/hr. is more stringent than the conventional shot speed of 170 km/hr or less commonly adopted in Japan.

### External rust resistance

After the organic composite coated steel strips were subjected to chemical conversion treatment and electrocoating as mentioned above, they were spray coated with an intermediate coat (TO-4830 by Nippon Paint K.K.) to a thickness of 40 µm and a topcoat (TO-4640-2 by Nippon Paint K.K.) to a thickness of 40 µm, both the coats being for automotive use. The samples were scratched by a saw. The samples were subject to a Volvo test wherein they were placed for exposure at the seashore and sprayed with sea water twice a week over 3 months. The place was a seashore in Tokyo Bay. By measuring the maximum width of swollen paint coating from the scratch (that is, corrosion width), evaluation was made according to the following criterion.

| Rating | Maximum coating swell (or corrosion) width |
|---|---|
| ⓞ | no |
| ○ | 0 < width ≤ 1 mm |
| △ | 1 mm < width ≤ 2 mm |
| X | > 2 mm |

### Wet adhesion

After the organic composite coated steel strips were subjected to chemical conversion treatment and electrocoating as mentioned above, they were spray coated with an intermediate coat (TO-4830 by Nippon Paint K.K.) to a thickness of 40 µm and a topcoat (TO-4640-2 by Nippon Paint K.K.) to a thickness of 40 µm, both the coats being for automotive use. The samples were immersed in deionized water at 50°C for 240 hours. The samples were taken out from water and subjected within 10 minutes to an adhesive tape strip test. Each sample was scribed with a cutter to define a pattern of 10x10 sections each 2 mm square. The percent of remaining coating sections after adhesive tape stripping was determined to evaluate the wet adhesion.

| Rating | Stripped area |
|---|---|
| ⓞ | 0% |
| ○ | 1-5% |
| △ | 6-15% |
| X | 16-35% |
| XX | > 35% |

### Chromium dissolution resistance

The amount of chromium before and after the chemical conversion treatment (phosphating) were measured by a fluorescent X-ray analyzer to determine the amount of chromium dissolved out (mg/m²). Evaluation was made according to the following criterion.

| Rating | Cr dissolved out |
|---|---|
| ⓞ | < 1 mg/m² |
| ○ | 1 mg/m² ≤ Cr < 2 mg/m² |
| △ | 2 mg/m² ≤ Cr < 5 mg/m² |
| X | ≥ 5 mg/m² |

### Spot weldability

To evaluate spot weldability, the organic composite coated steel strips with both surfaces coated are continuously spot welded by use of welding tip of Al₂O₃ dispersed copper alloy having 5 mm of tip end diameter under the conditions of 200 kgf of pressure, 9 KA of welding current, 10 Hz of welding period of time to measure the number of spot weld which nugget formed at weld clear a standard diameter.

The criterion is as follows:

| | |
|---|---|
| ⓞ | 2000 or more |
| ○ | 1000 - 2000 |
| Δ | 500 - 1000 |
| X | less than 500 |

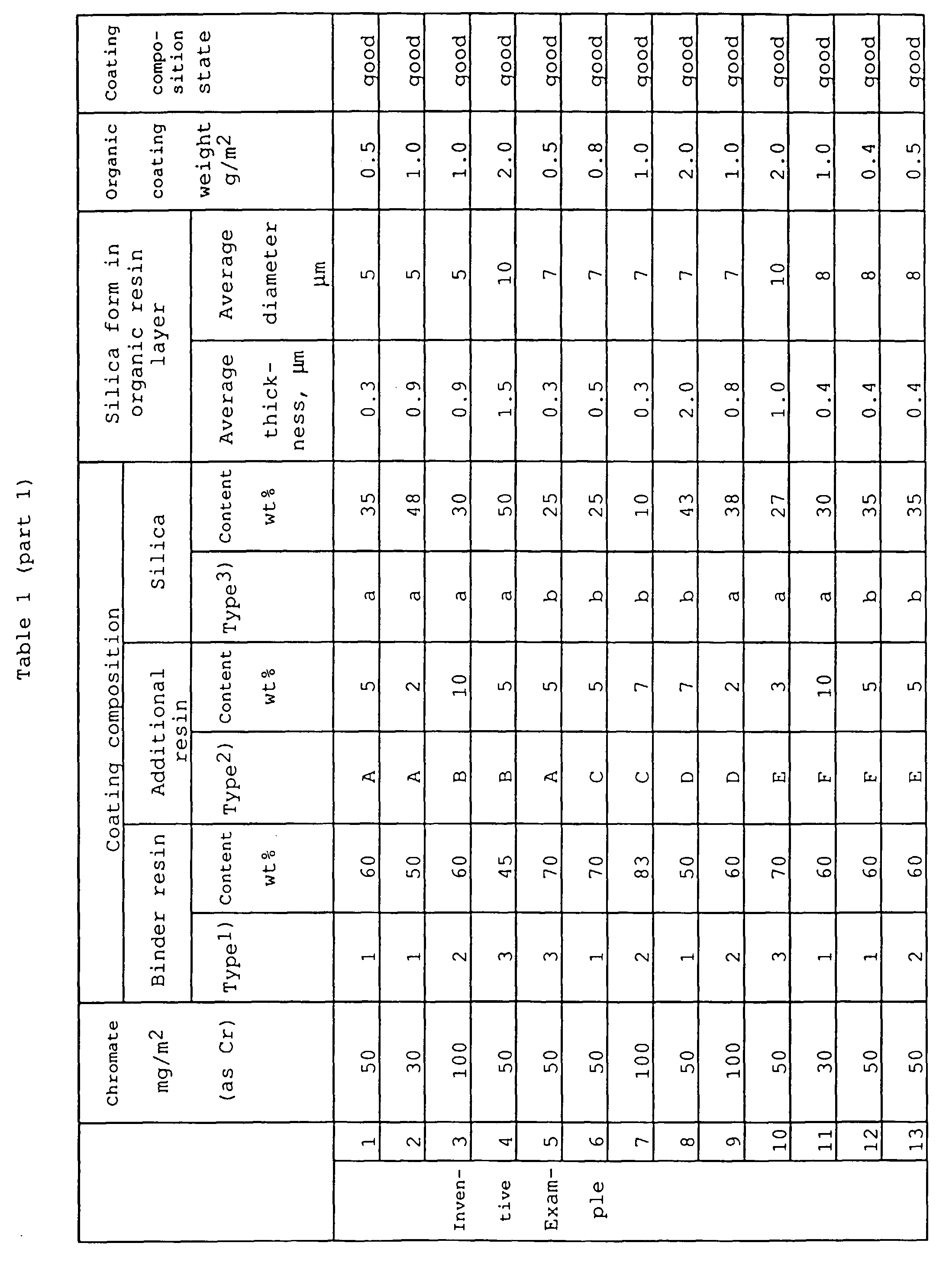

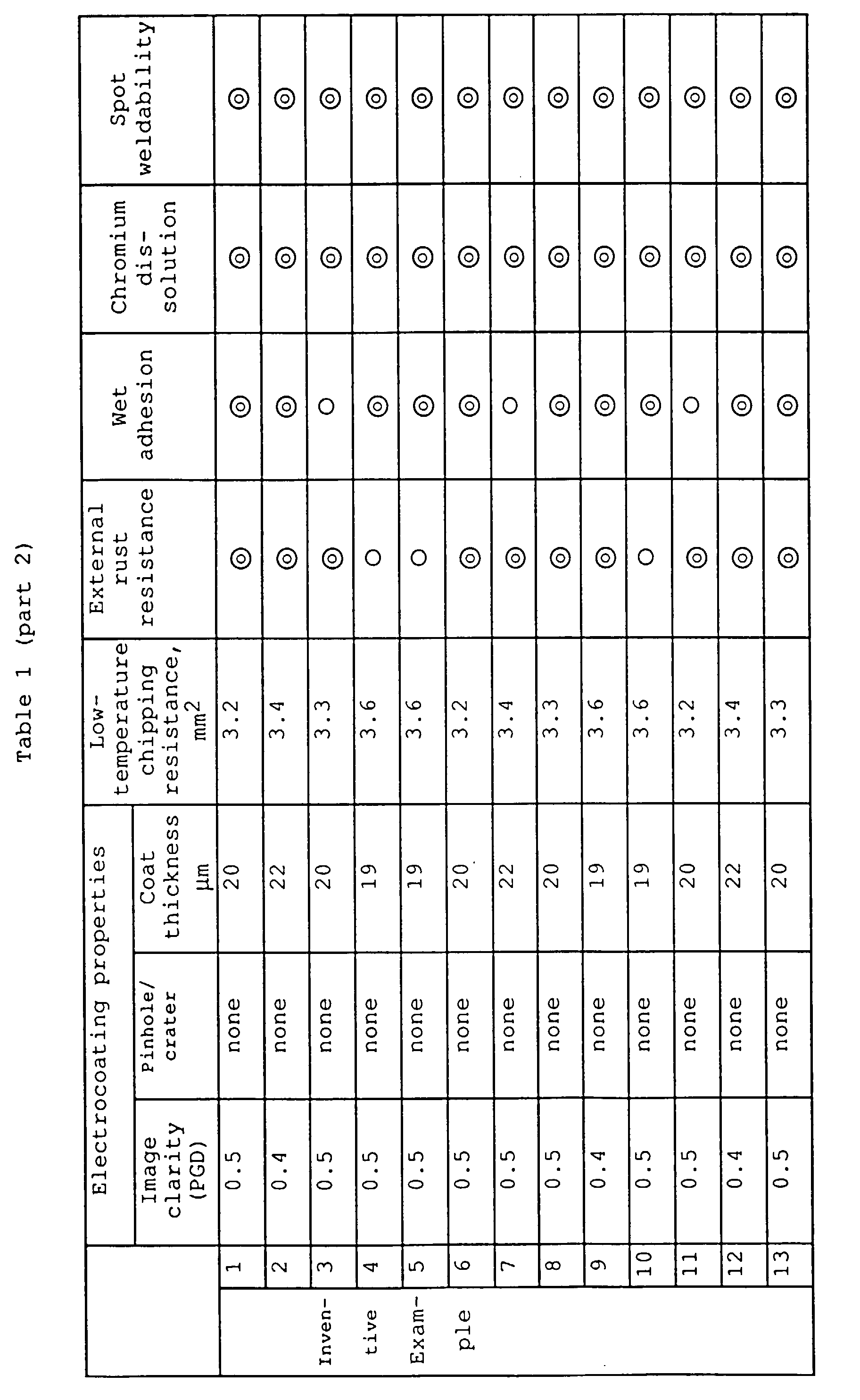

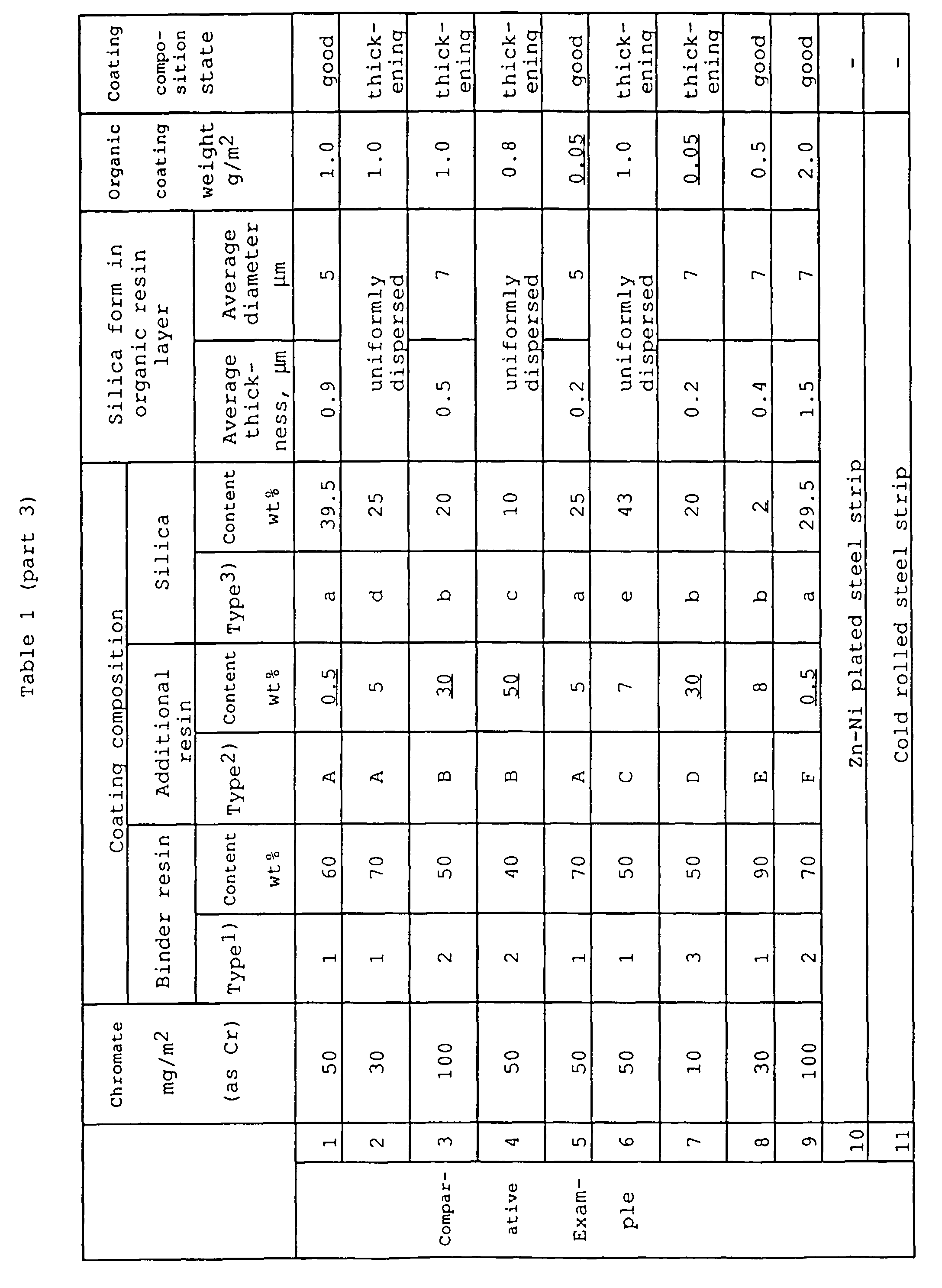

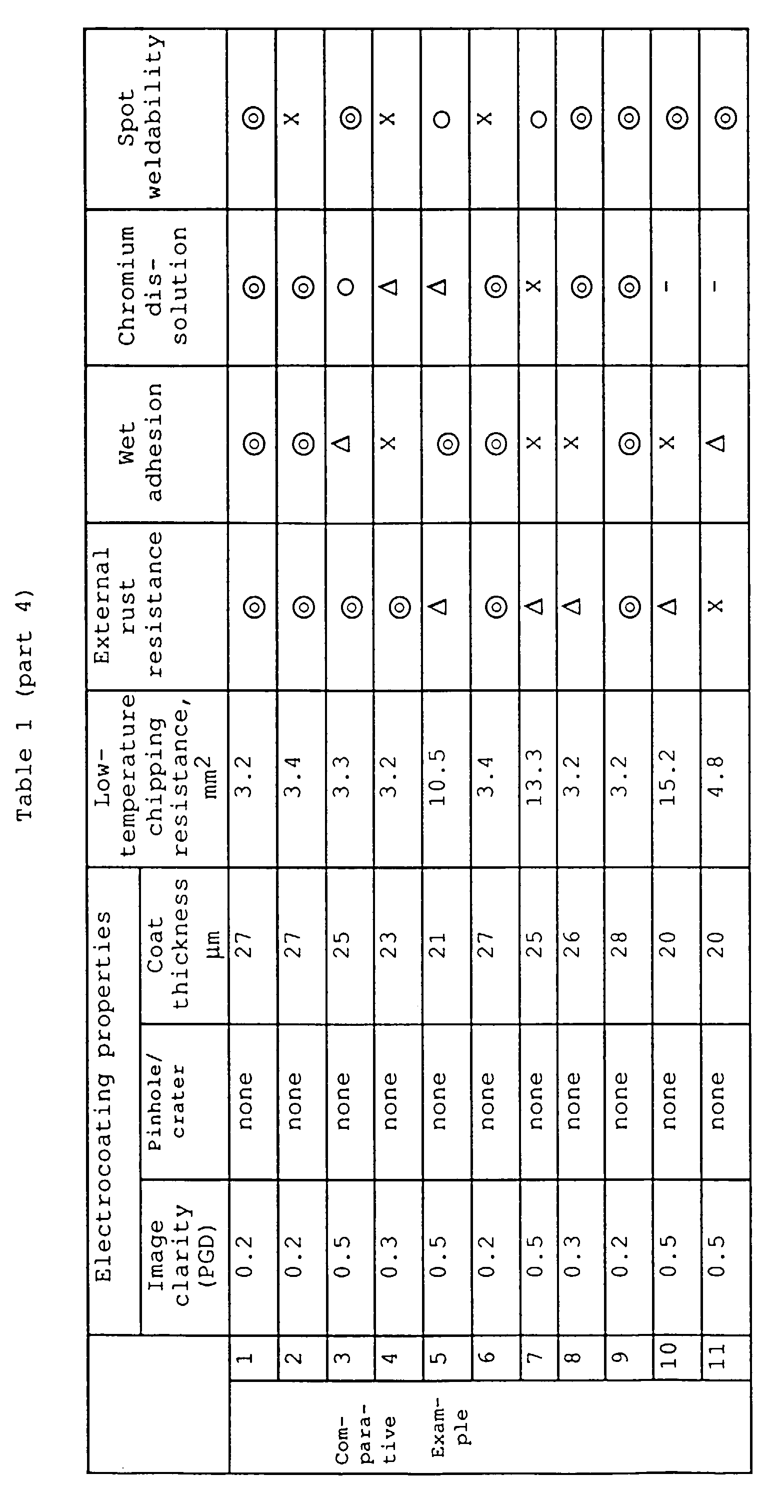

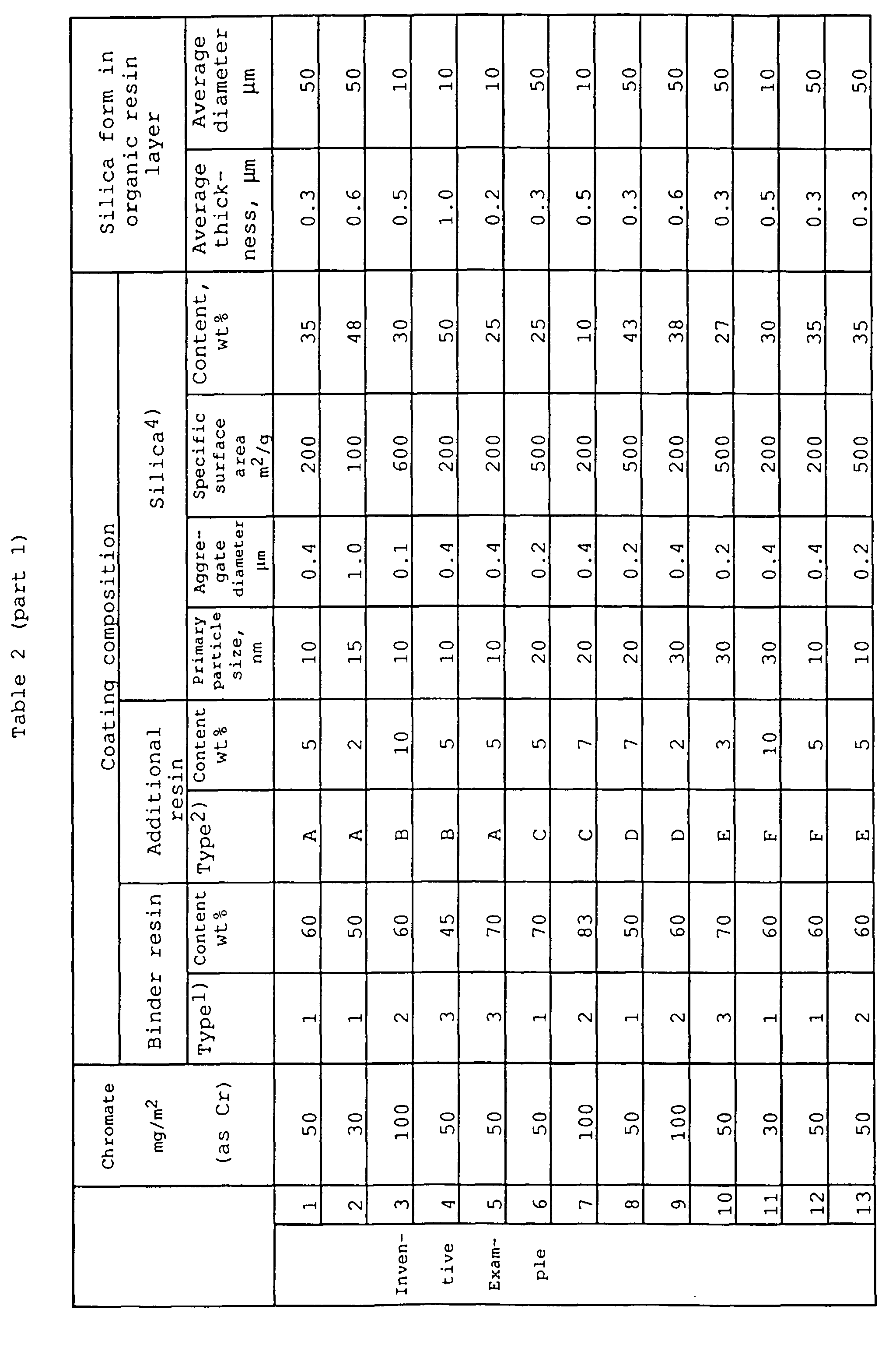

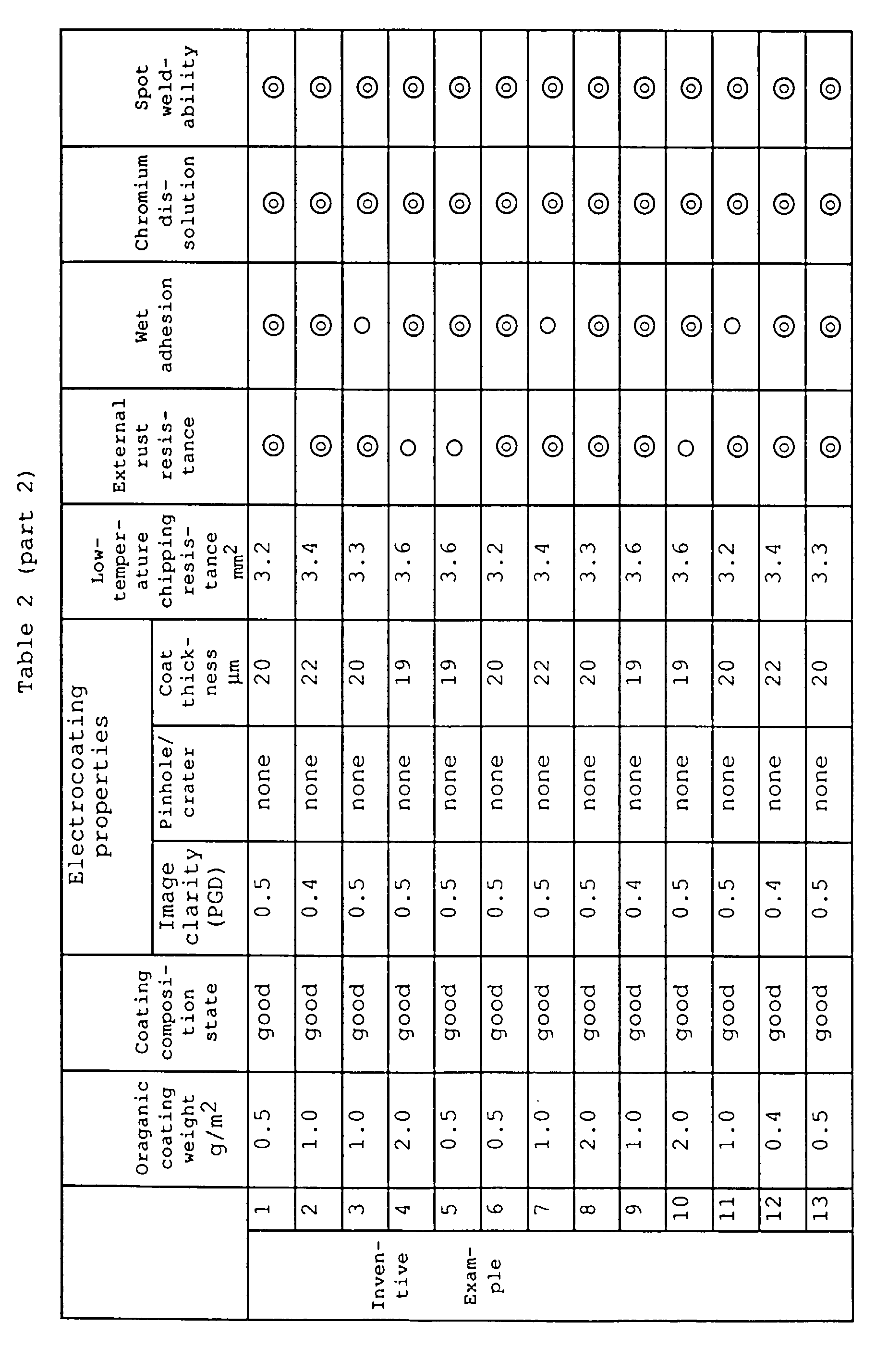

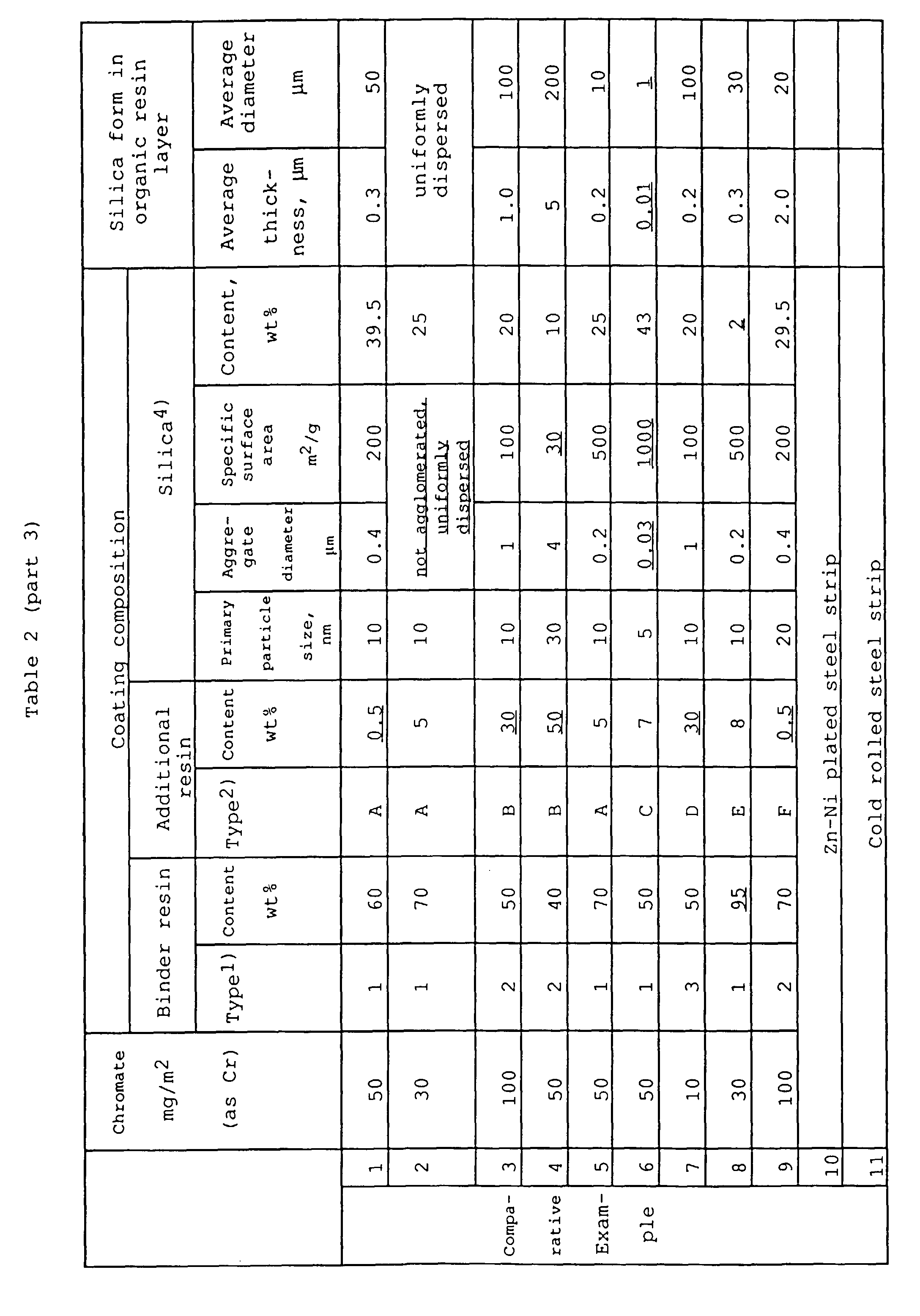

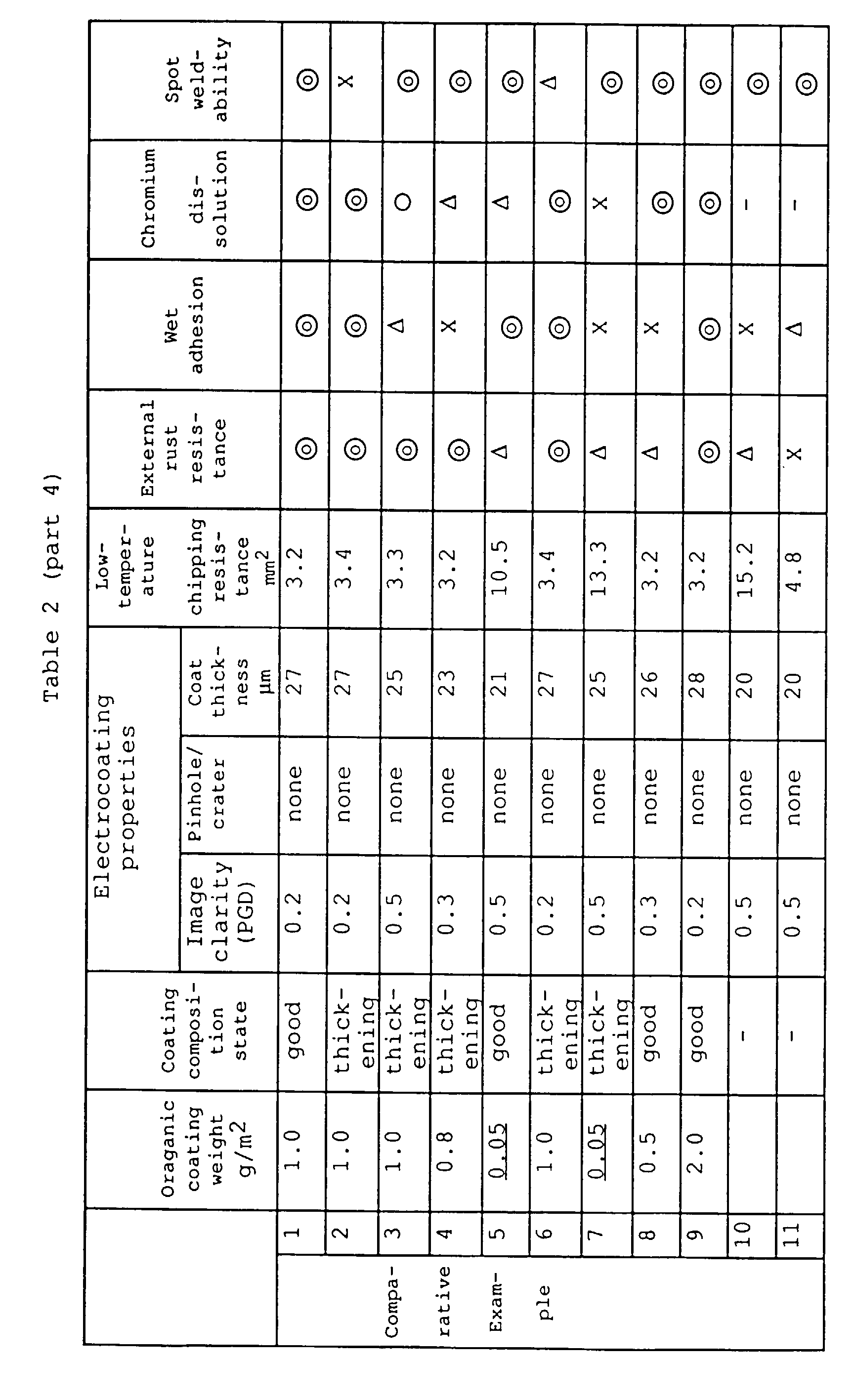

The symbols used in Tables 1 and 2 have the following meaning.

### 1) Binder resin

1: Urethane-modified epoxy resin
   (A) Preparation of an isocyanate compound
      A reactor equipped with a reflux condenser, stirrer, thermometer and nitrogen gas inlet tube was charged with 528 parts by weight of hexamethylene diisocyanate and 620 parts by weight of methyl isobutyl ketone. The ingredients were fully mixed to form a homogeneous solution which was heated to 80°C and 92 parts by weight of glycerin was added dropwise over one hour. Reaction was effected at 100°C for 4 hours. There was obtained an isocyanate compound A having a nonvolatile content of 50%. Compound A had an isocyanate equivalent of 207 in solids value.
   (B) Preparation of base resin
      A reactor equipped with a reflux condenser, stirrer, thermometer and nitrogen gas inlet tube was charged with 2000 parts by weight of Epikoat 1007 (epoxy resin, epoxy equivalent 2000, manufactured by Shell Chemical K.K.) and 1000 parts by weight of toluene. The ingredients were heated to 80°C to form a homogeneous solution. To the solution, 600 parts by weight (solids) of isocyanate compound A was added dropwise over one hour. Reaction was effected at 80°C for 3 hours. The end of reaction was detected when the absorption of an isocyanate group (at 2270 cm⁻¹) disappeared as measured by an infrared spectrometer. There was obtained a urethane-modified epoxy resin having an epoxy equivalent of 2600.
      To the urethane-modified epoxy resin was added 105 parts by weight of diethanolamine. Reaction was effected at 80°C for 2 hours.
2: Amine-modified epoxy resin
   A reactor equipped with a reflux condenser, stirrer, thermometer and nitrogen gas inlet tube was charged with 2000 parts by weight of Epikoat 1007 (epoxy resin, epoxy equivalent 2000, manufactured by Shell Chemical K.K.) and 1000 parts by weight of toluene. The ingredients were heated to 80°C to form a homogeneous solution. To the solution, 52.5 parts by weight of diethanolamine was added dropwise over 30 minutes and reaction was effected for a further one hour. To the solution, 110.5 parts by weight of γ-aminopropyltrimethoxysilane (trade name A-1100, manufactured by Nippon Unicar K.K.) was added dropwise over 30 minutes and reaction was effected at 80°C for a further two hours.
   To 100 parts by weight (solids) of the resulting composite resin was added 40 parts by weight of a methylated melamine resin (trade name Super-Beckamine L-105-60, manufactured by Dai-Nippon Ink K.K.) as a curing agent.
3: Acrylic resin (trade name Dianal HR633, manufactured by Mitsubishi Rayon K.K.)

### 2) Additional resin

### Polyamide resin

A: Versamide 115D manufactured by Henkel Hakusui K.K.
B: Newmide 505-65 manufactured by KC Yugen Kaisha Polyamine resin
C: PAH-L manufactured by Otsuka Chemical K.K.
D: Acrylic resin synthesized as follows.
   A reactor equipped with a stirrer, thermometer, dropping funnel and condenser was charged with 100 parts by weight of ethylene glycol monoethyl ether and heated to a temperature of 90°C. Then monomers and initiator were added dropwise over 3 hours. The monomers and initiator were 60 parts by weight of dimethylaminoethyl methacrylate, 10 parts by weight of methyl acrylate, 25 parts by weight of isobutyl acrylate, 5 parts by weight of N-n-methoxymethylacrylamide, and 0.5 parts by weight of azobisisobutyronitrile. After the completion of dropwise addition, 0.25 parts by weight of azobisisobutyronitrile was added in four portions at intervals of 30 minutes. Reaction was continued at the same temperature for 4 hours, obtaining a copolymer solution having a nonvolatile content of 50% by weight.

### Polyimine resin

E: Epomine SP-018 manufactured by Nippon Shokubai K.K.
F: Epomine SP-200 manufactured by Nippon Shokubai K.K.

### 3) Silica (chain-linked fumed silica, Table 1)

a: Aerosil 200 CF (manufactured by Nippon Aerosil K.K.) was mixed with a resin to a nonvolatile content of 20% by weight and agitated for 10 minutes by a disper, obtaining a chain-linked fumed silica.
b: Aerosil R972 (manufactured by Nippon Aerosil K.K.) was mixed with a resin to a nonvolatile content of 20% by weight and agitated for 10 minutes by a disper, obtaining a chain-linked fumed silica.
c: Aerosil 200 CF (manufactured by Nippon Aerosil K.K.) was mixed with a resin to a nonvolatile content of 20% by weight, agitated for 1 hour by a disper, and then ground, obtaining a uniformly dispersed silica.
d: Aerosil OX50 (manufactured by Nippon Aerosil K.K.) was mixed with a resin to a nonvolatile content of 20% by weight and agitated for 10 minutes by a disper, obtaining a uniformly dispersed silica.
e: Snowtex 30 (manufactured by Nissan Chemical K.K.) was mixed with a resin to a nonvolatile content of 20% by weight and agitated for 10 minutes by a disper, obtaining a uniformly dispersed silica.

### 4) Silica (agglomerated silica, Table 2)

The size of silica sol dispersed in ethylene glycol monoethyl ether is reported.

The average primary particle size was determined by making measurement on 2 ml of silica sol prior to secondary agglomeration by centrifuge (CAPA) and taking an average of the measurements.

The average aggregate diameter was determined by making measurement on 2 ml of silica sol after secondary agglomeration by centrifuge (CAPA) and taking an average of the measurements.

The specific surface area was by a BET method.

In Table 1, Examples 1 to 13 are within the scope of the present invention and show satisfactory electrocoating properties and meet the performance requirements for automotive body outer panels.

Comparative Examples 1 and 9 in Table 1 having a lower content of the additional resin were poor in electrocoating as demonstrated by thick electrocoats and poor image clarity after electrocoating. Comparative Example 2 using non-chain-linked silica was poor in electrocoating as demonstrated by thick electrocoats and poor image clarity after electrocoating. The coating composition was difficult to control the coating weight. For the tests, a selected portion having a coating weight of 1.0 g/m² was used. Comparative Example 3 having a higher content of the additional resin was good in electrocoating, but poor in wet adhesion. Comparative Example 4 showed poor image clarity after electrocoating because silica particles were uniformly dispersed in the coating composition. Also wet adhesion and chromium dissolution resistance were poor because of a higher content of the additional resin. In Comparative Example 5 having a lower buildup of the organic resin coating, the organic resin coating could not fully exert its effect of improving low-temperature chipping resistance. Because of insufficient coverage of the chromate layer by the organic resin coating, chromium dissolution resistance was poor. Comparative Example 6 using uniformly dispersed silica sol was poor in image clarity after electrocoating and in applicability of the coating composition. In Comparative Example 7 having a lower buildup of the organic resin coating, the organic resin coating could not fully exert its effect of improving low-temperature chipping resistance. Because of the increased content of the additional resin, external rust resistance, wet adhesion, and chromium dissolution resistance were poor. Comparative Example 8 having a lower content of silica in the coating composition (solids content) was poor in external rust resistance and wet adhesion. Comparative Example 10 and 11 are conventional Zn-Ni alloy plated steel strip and cold rolled steel strip, respectively.

In Table 2, Examples 1 to 13 are within the scope of the present invention and show satisfactory electrocoating properties and meet the performance requirements for automotive body outer panels.

Comparative Examples 1 and 9 in Table 2 having a lower content of the additional resin were poor in electrocoating as demonstrated by thick electrocoats and poor image clarity after electrocoating. Comparative Example 2 using silica uniformly dispersed in a solvent was poor in electrocoating as demonstrated by thick electrocoats and poor image clarity after electrocoating. The coating composition was difficult to control the coating weight. For the tests, a selected portion having a coating weight of 1.0 g/m² was used. Comparative Example 3 having a higher content of the additional resin was good in electrocoating, but poor in wet adhesion. Comparative Example 4 using silica aggregates as large as 4 µm in diameter in the coating composition presented an uneven resin coating and showed poor image clarity after electrocoating. Also wet adhesion and chromium dissolution resistance were poor because of a higher content of the additional resin. In Comparative Example 5 having a lower buildup of the organic resin coating, the organic resin coating could not fully exert its effect of improving low-temperature chipping resistance. Because of insufficient coverage of the chromate layer by the organic resin coating, chromium dissolution resistance was poor. Comparative Example 6 wherein silica particles formed less desirable aggregates which had an aggregate diameter as small as 0.03 µm and a specific surface area as large as 100 m²/g was poor in image clarity after electrocoating and in applicability of the coating composition. In Comparative Example 7 having a lower buildup of the organic resin coating, the organic resin coating could not fully exert its effect of improving low-temperature chipping resistance. Because of the increased content of the additional resin, external rust resistance, wet adhesion, and chromium dissolution resistance were poor. Comparative Example 8 having a lower content of silica in the coating composition (solids content) was poor in external rust resistance and wet adhesion. Comparative Example 10 and 11 are conventional Zn-Ni alloy plated steel strip and cold rolled steel strip, respectively.

According to the method of the present invention, there is obtained an organic composite coated steel strip which offers improved electrocoating susceptibility, especially sufficient image clarity after electrocoating to provide an outer appearance at least equivalent to those of conventional zinc plated steel strips and cold rolled steel strips, and which is also improved in wet adhesion, rust prevention, low-temperature chipping resistance, and spot weldability. The organic composite coated steel strip is thus best suited for automotive body outer panels. The invention thus contributes to an improvement in durability of automotive bodies and hence, a saving of global resource.

Although some preferred embodiments have been described, many modifications and variations may be made thereto in the light of the above teachings. It is therefore to be understood that within the scope of the appended claims, the invention may be practiced otherwise than as specifically described.

## Claims

1. An organic composite coated steel strip having improved electrocoating properties and corrosion resistance, comprising
a zinc or zinc base alloy plated steel strip,
a chromate coating on the plated steel strip having a weight of 5 to 500 mg/m² calculated as chromium, and
a resin coating on the chromate coating having a dry weight of 0.1 to 3 g/m²,
said resin coating being of a composition comprising particulate silica, a binder resin, and 1 to 10% by weight of at least one resin selected from the group consisting of a polyamide resin, polyamine resin, and polyimine resin, said silica particles having an average primary particle size of 5 to 30 nm and being agglomerated in said resin coating to form laminar aggregates having an average thickness of 0.2 to 2 µm and an average diameter of 5 to 300 µm.

2. An organic composite coated steel strip according to claim 1 wherein said binder resin is a composition comprising
100 parts by weight of a modified epoxy resin which is obtained by adding a dialkanolamine to an epichlorohydrin-bisphenol A type epoxy resin having an epoxy equivalent of 500 to 5,000 in an amount of 0.8 to 1.0 mol per equivalent of the epoxy group in said epoxy resin,
0.5 to 10 parts by weight of a silane coupling agent per 100 parts by weight of the modified epoxy resin, and
5 to 70 parts by weight of an amino resin per 100 parts by weight of the modified epoxy resin.

3. An organic composite coated steel strip according to claim 1 wherein said binder resin is a modified epoxy resin which is obtained by reacting 100 parts by weight of an epichlorohydrin-bisphenol A type epoxy resin with 10 to 100 parts by weight of an isocyanate compound to form a urethane-modified epoxy resin having an epoxy equivalent of 1,000 to 5,000 and adding a dialkanolamine to the urethane-modified epoxy resin in an amount of 0.5 to 1.0 mol per equivalent of the epoxy group in said urethane-modified epoxy resin.

4. A method for preparing an organic composite coated steel strip having improved electrocoating properties, comprising the steps of
forming a chromate coating on a zinc or zinc base alloy plated steel strip in a weight of 5 to 500 mg/m² calculated as chromium, and
applying a coating composition to the chromate coating, followed by drying to form a resin coating having a dry weight of 0.1 to 3 g/m², said coating composition containing (A) chain-linked fumed silica having an average primary particle size of 5 to 30 nm and being agglomerated to form a chain link having an average length of at least 0.1 µm, (B) a binder resin, and (C) at least one additional resin selected from the group consisting of a polyamide resin, polyamine resin, and polyimine resin.

5. A method according to claim 4 wherein said coating composition contains said binder resin (B) and said additional resin (C) in a total amount of 40 to 90% by weight of the solids content and said chain-linked fumed silica (A) in an amount of 60 to 10% by weight of the solids content.

6. A method according to claim 4 wherein said coating composition contains said binder resin (B) and said additional resin (C) in a total amount of 40 to 90% by weight of the solids content and said chain-linked fumed silica (A) in an amount of 60 to 10% by weight of the solids content, the content of said additional resin (C) being 1 to 10% by weight of the solids content.

7. A method according to any one of claims 4 to 6 wherein said binder resin is a composition comprising
100 parts by weight of a modified epoxy resin which is obtained by adding a dialkanolamine to an epichlorohydrin-bisphenol A type epoxy resin having an epoxy equivalent of 500 to 5,000 in an amount of 0.8 to 1.0 mol per equivalent of the epoxy group in said epoxy resin,
0.5 to 10 parts by weight of a silane coupling agent per 100 parts by weight of the modified epoxy resin, and
5 to 70 parts by weight of an amino resin per 100 parts by weight of the modified epoxy resin.

8. A method according to any one of claims 4 to 6 wherein said binder resin is a modified epoxy resin which is obtained by reacting 100 parts by weight of an epichlorohydrin-bisphenol A type epoxy resin with 10 to 100 parts by weight of an isocyanate compound to form a urethane-modified epoxy resin having an epoxy equivalent of 1,000 to 5,000 and adding a dialkanolamine to the urethane-modified epoxy resin in an amount of 0.5 to 1.0 mol per equivalent of the epoxy group in said urethane-modified epoxy resin.

9. A method for preparing an organic composite coated steel strip offering improved image clarity, corrosion resistance, and secondary paint adherence after electrocoating, comprising the steps of
forming a chromate coating on a zinc or zinc base alloy plated steel strip in a weight of 5 to 500 mg/m² calculated as chromium, and
applying a coating composition to the chromate coating, followed by drying to form a resin coating having a dry weight of 0.1 to 3 g/m², said coating composition containing (A) a silica sol dispersed in an organic solvent having an average primary particle size of 5 to 30 nm and being agglomerated to form aggregates having an average diameter of 100 to 2,000 nm and a specific surface area of 50 to 800 m²/g, (B) a binder resin, and (C) at least one additional resin selected from the group consisting of a polyamide resin, polyamine resin, and polyimine resin.

10. A method according to claim 9 wherein said coating composition contains said binder resin (B) and said additional resin (C) in a total amount of 40 to 90% by weight of the solids content and said silica sol (A) in an amount of 60 to 10% by weight of the solids content.

11. A method according to claim 9 wherein said coating composition contains said binder resin (B) and said additional resin (C) in a total amount of 40 to 90% by weight of the solids content and said silica sol (A) in an amount of 60 to 10% by weight of the solids content, the content of said additional resin (C) being 1 to 10% by weight of the solids content.

12. A method according to any one of claims 9 to 11 wherein said binder resin is a composition comprising
100 parts by weight of a modified epoxy resin which is obtained by adding a dialkanolamine to an epichlorohydrin-bisphenol A type epoxy resin having an epoxy equivalent of 500 to 5,000 in an amount of 0.8 to 1.0 mol per equivalent of the epoxy group in said epoxy resin,
0.5 to 10 parts by weight of a silane coupling agent per 100 parts by weight of the modified epoxy resin, and
5 to 70 parts by weight of an amino resin per 100 parts by weight of the modified epoxy resin.

13. A method according to any one of claims 9 to 11 wherein said binder resin is a modified epoxy resin which is obtained by reacting 100 parts by weight of an epichlorohydrin-bisphenol A type epoxy resin with 10 to 100 parts by weight of an isocyanate compound to form a urethane-modified epoxy resin having an epoxy equivalent of 1,000 to 5,000 and adding a dialkanolamine to the urethane-modified epoxy resin in an amount of 0.5 to 1.0 mol per equivalent of the epoxy group in said urethane-modified epoxy resin.

## Patentansprüche

1. Mit einem organischen Verbundwerkstoff beschichtetes Stahlband mit verbesserten Galvanisiereigenschaften und verbesserter Korrosionsfestigkeit, umfassend ein mit Zink oder einer Legierung auf Zinkbasis verzinktes Stahlband,
einen auf dem verzinkten Stahlband aufgetragenen Chromatüberzug eines - als Chrom berechneten - Gewichts von 5 bis 500 mg/m², und
einen auf dem Chromatüberzug befindlichen Harzüberzug eines Trockengewichts von 0,1 bis 3 g/m²,
wobei der Harzüberzug aus einer Zusammensetzung, umfassend teilchenförmiges Siliciumdioxid, ein Harzbindemittel und 1 bis 10 Gew.-% mindestens eines Harzes, ausgewählt aus der Gruppe ein Polyamidharz, Polyaminharz und Polyiminharz, gebildet ist und die Siliciumdioxidteilchen eine durchschnittliche Primärteilchengröße von 5 bis 30 nm aufweisen und in dem Harzüberzug derart agglomeriert sind, daß sie laminare Aggregate einer durchschnittlichen Dicke von 0,2 bis 2 µm und eines durchschnittlichen Durchmessers von 5 bis 300 µm bilden.

2. Mit einem organischen Verbundwerkstoff beschichtetes Stahlband nach Anspruch 1, wobei das Harzbindemittel aus einer Zusammensetzung, umfassend 100 Gewichtsteile eines modifizierten Epoxyharzes, das durch Addition eines Dialkanolamins an ein Epoxyharz vom Epichlorhydrin-Bisphenol A-Typ eines Epoxyäquivalents von 500 bis 5000 in einer Menge von 0,8 bis 1,0 mol pro Äquivalent der Epoxygruppe in dem Epoxyharz erhalten wurde, 0,5 bis 10 Gewichtsteil(e) eines Silankupplungsmittels pro 100 Gewichtsteile des modifizierten Epoxyharzes und 5 bis 70 Gewichtsteile eines Aminoharzes pro 100 Gewichtsteile des modifizierten Epoxyharzes, besteht.

3. Mit einem organischen Verbundwerkstoff beschichtetes Stahlband nach Anspruch 1, wobei das Harzbindemittel aus einem modifizierten Epoxyharz, das durch Umsetzen von 100 Gewichtsteilen eines Epoxyharzes vom Epichlorhydrin-Bisphenol A-Typ mit 10 bis 100 Gewichtsteilen einer Isocyanatverbindung zur Bildung eines urethanmodifizierten Epoxyharzes eines Epoxyäquivalents von 1000 bis 5000 und Addition eines Dialkanolamins an das urethanmodifizierte Epoxyharz in einer Menge von 0,5 bis 1,0 mol pro Äquivalent der Epoxygruppe in dem urethanmodifizierten Epoxyharz erhalten wurde, besteht.

4. Verfahren zur Herstellung eines mit einem organischen Verbundwerkstoff beschichteten Stahlbandes verbesserter Galvanisiereigenschaften in folgenden Stufen:
Ausbilden eines Chromatüberzugs auf einem mit Zink oder einer Legierung auf Zinkbasis verzinkten Stahlband in einer - als Chrom berechneten - Gewichtsmenge von 5 bis 500 mg/m² und
Applikation einer Beschichtungsmasse auf den Chromatüberzug und anschließendes Trocknen zur Bildung eines Harzüberzugs eines Trockengewichts von 0,1 bis 3 g/m², wobei die Beschichtungsmasse
(A) kettenverknüpften Quarzstaub einer durchschnittlichen Primärteilchengröße von 5 bis 30 nm in einem Agglomerationszustand zur Bildung einer Kettenverknüpfung einer durchschnittlichen Länge von mindestens 0,1 µm,
(B) ein Harzbindemittel und
(C) mindestens ein weiteres Harz, ausgewählt aus der Gruppe ein Polyamidharz, Polyaminharz und Polyiminharz,
enthält.

5. Verfahren nach Anspruch 4, wobei die Beschichtungsmasse das Harzbindemittel (B) und das weitere Harz (C) in einer Gesamtmenge von 40 bis 90 Gew.-% des Feststoffgehalts und den kettenverknüpften Quarzstaub (A) in einer Menge von 60 bis 10 Gew.-% des Feststoffgehalts enthält.

6. Verfahren nach Anspruch 4, wobei die Beschichtungsmasse das Harzbindemittel (B) und das weitere Harz (C) in einer Gesamtmenge von 40 bis 90 Gew.-% des Feststoffgehalts und den kettenverknüpften Quarzstaub (A) in einer Menge von 60 bis 10 Gew.-% des Feststoffgehalts enthält und der Gehalt an dem weiteren Harz (C) 1 bis 10 Gew.-% des Feststoffgehalts beträgt.

7. Verfahren nach einem der Ansprüche 4 bis 6, wobei es sich bei dem Harzbindemittel um eine Zusammensetzung, umfassend
100 Gewichtsteile eines modifizierten Epoxyharzes, das durch Addition eines Dialkanolamins an ein Epoxyharz vom Epichlorhydrin-Bisphenol A-Typ eines Epoxyäquivalents von 500 bis 5000 in einer Menge von 0,8 bis 1,0 mol pro Äquivalent der Epoxygruppe in dem Epoxyharz erhalten wurde,
0,5 bis 10 Gewichtsteil(e) eines Silankupplungsmittels pro 100 Gewichtsteile des modifizierten Epoxyharzes, und
5 bis 70 Gewichtsteile eines Aminoharzes pro 100 Gewichtsteile des modifizierten Epoxyharzes,
handelt.

8. Verfahren nach einem der Ansprüche 4 bis 6, wobei es sich bei dem Harzbindemittel um ein modifiziertes Epoxyharz, das durch Umsetzen von 100 Gewichtsteilen eines Epoxyharzes vom Epichlorhydrin-Bisphenol A-Typ mit 10 bis 100 Gewichtsteilen einer Isocyanatverbindung zur Bildung eines urethanmodifizierten Epoxyharzes eines Epoxyäquivalents von 1000 bis 5000 und Addition eines Dialkanolamins an das urethanmodifizierte Epoxyharz in einer Menge von 0,5 bis 1,0 mol pro Äquivalent der Epoxygruppe in dem urethanmodifizierten Epoxyharz erhalten wurde, handelt.

9. Verfahren zur Herstellung eines mit einem organischen Verbundwerkstoff beschichteten Stahlbandes verbesserter Bildklarheit, verbesserter Korrosionsfestigkeit und verbesserter Haftung einer zweiten Lackierung nach dem Galvanisieren in folgenden Stufen:
Ausbilden eines Chromatüberzugs auf einem mit Zink oder einer Legierung auf Zinkbasis verzinkten Stahlband in einer - als Chrom berechneten - Gewichtsmenge von 5 bis 500 mg/m² und
Applikation einer Beschichtungsmasse auf den Chromatüberzug und anschließendes Trocknen zur Bildung eines Harzüberzugs eines Trockengewichts von 0,1 bis 3 g/m², wobei die Beschichtungsmasse
(A) ein in einem organischen Lösungsmittel dispergiertes Silicasol einer durchschnittlichen Primärteilchengröße von 5 bis 30 nm in einem solchen Agglomerationszustand, daß Aggregate eines durchschnittlichen Durchmessers von 100 bis 2000 nm und einer spezifischen Oberfläche von 50 bis 800 m²/g entstehen,
(B) ein Harzbindemittel und
(C) mindestens ein weiteres Harz, ausgewählt aus der Gruppe ein Polyamidharz, Polyaminharz und Polyiminharz,
enthält.

10. Verfahren nach Anspruch 9, wobei die Beschichtungsmasse das Harzbindemittel (B) und das weitere Harz (C) in einer Gesamtmenge von 40 bis 90 Gew.-% des Feststoffgehalts und das Silicasol (A) in einer Menge von 60 bis 10 Gew.-% des Feststoffgehalts enthält.

11. Verfahren nach Anspruch 9, wobei die Beschichtungsmasse das Harzbindemittel (B) und das weitere Harz (C) in einer Gesamtmenge von 40 bis 90 Gew.-% des Feststoffgehalts und das Silicasol (A) in einer Menge von 60 bis 10 Gew.-% des Feststoffgehalts enthält und der Gehalt an dem weiteren Harz (C) 1 bis 10 Gew.-% des Feststoffgehalts beträgt.

12. Verfahren nach einem der Ansprüche 9 bis 11, wobei es sich bei dem Harzbindemittel um eine Zusammensetzung, umfassend
100 Gewichtsteile eines modifizierten Epoxyharzes, das durch Addition eines Dialkanolamins an ein Epoxyharz vom Epichlorhydrin-Bisphenol A-Typ eines Epoxyäquivalents von 500 bis 5000 in einer Menge von 0,8 bis 1,0 mol pro Äquivalent der Epoxygruppe in dem Epoxyharz erhalten wurde,
0,5 bis 10 Gewichtsteil(e) eines Silankupplungsmittels pro 100 Gewichtsteile des modifizierten Epoxyharzes, und
5 bis 70 Gewichtsteile eines Aminoharzes pro 100 Gewichtsteile des modifizierten Epoxyharzes,
handelt.

13. Verfahren nach einem der Ansprüche 9 bis 11, wobei es sich bei dem Harzbindemittel um ein modifiziertes Epoxyharz, das durch Umsetzen von 100 Gewichtsteilen eines Epoxyharzes vom Epichlorhydrin-Bisphenol A-Typ mit 10 bis 100 Gewichtsteilen einer Isocyanatverbindung zur Bildung eines urethanmodifizierten Epoxyharzes eines Epoxyäquivalents von 1000 bis 5000 und Addition eines Dialkanolamins an das urethanmodifizierte Epoxyharz in einer Menge von 0,5 bis 1,0 mol pro Äquivalent der Epoxygruppe in dem urethanmodifizierten Epoxyharz erhalten wurde, handelt.

## Revendications

1. Bande d'acier revêtue de composite organique ayant des propriétés de revêtement électrolytique et de résistance à la corrosion améliorées, comprenant
une bande d'acier plaquée de zinc ou d'alliage à base de zinc,
un revêtement de chromate sur la bande d'acier plaquée ayant un grammage de 5 à 500 mg/m² calculé en chrome, et
un revêtement de résine sur le revêtement de chromate ayant un grammage sec de 0,1 à 3 g/m²,
ledit revêtement de résine étant d'une composition comprenant de la silice particulaire, une résine liante et 1 à 10 % en poids d'au moins une résine choisie dans le groupe constitué par une résine polyamide, une résine polyamine et une résine polyimine, lesdites particules de silice ayant une taille moyenne de particule primaire de 5 à 30 nm et étant agglomérées dans ledit revêtement de résine pour former des agrégats laminaires ayant une épaisseur moyenne de 0,2 à 2 µm et un diamètre moyen de 5 à 300 µm.

2. Bande d'acier revêtue d'un composite organique selon la revendication 1, dans laquelle ladite résine liante est une composition comprenant
100 parties en poids d'une résine époxy modifiée qui est obtenue en additionnant une dialcanolamine à une résine époxy de type épichlorhydrine/bisphénol A ayant un équivalent époxy de 500 à 5 000 en une quantité de 0,8 à 1,0 mole par équivalent du groupe époxy dans ladite résine époxy,
0,5 à 10 parties en poids d'un agent de couplage silane pour 100 parties en poids de la résine époxy modifiée, et
5 à 70 parties en poids d'une résine amino pour 100 parties en poids de la résine époxy modifiée.

3. Bande d'acier revêtue de composite organique selon la revendication 1, dans laquelle ladite résine liante est une résine époxy modifiée qui est obtenue en faisant réagir 100 parties en poids d'une résine époxy de type épichlorhydrine/bisphénol A avec 10 à 100 parties en poids d'un composé isocyanate pour former une résine époxy modifiée par un uréthane ayant un équivalent époxy de 1 000 à 5 000, et en additionnant une dialcanolamine à la résine époxy modifiée par un uréthane en une quantité de 0,5 à 1,0 mole par équivalent du groupe époxy dans ladite résine époxy modifiée par un uréthane.

4. Procédé pour préparer une bande d'acier revêtue d'un composite organique ayant des propriétés de revêtement électrolytique améliorées, comprenant les étapes consistant
à former un revêtement de chromate sur une bande d'acier plaquée de zinc ou d'alliage à base de zinc, en un grammage de 5 à 500 mg/m², calculé en chrome, et
à appliquer une composition de revêtement sur le revêtement de chromate, puis à sécher pour former un revêtement de résine ayant un grammage sec de 0,1 à 3 g/m², ladite composition de revêtement contenant (A) de la silice sublimée liée en une chaîne, ayant une taille moyenne de particule primaire de 5 à 30 nm et étant agglomérée pour former une maillon de chaîne ayant une longueur moyenne d'au moins 0,1 µm, (B) une résine liante et (C) au moins une résine supplémentaire choisie dans le groupe constitué par une résine polyamide, une résine polyamine et une résine polyimine.

5. Procédé selon la revendication 4, dans lequel ladite composition de revêtement contient ladite résine liante (B) et ladite résine supplémentaire (C) en une proportion totale de 40 à 90 % en poids par rapport à la teneur en matières solides, et ladite silice sublimée liée en une chaîne (A) en une proportion de 60 à 10 % en poids par rapport à la teneur en matières solides.

6. Procédé selon la revendication 4, dans lequel ladite composition de revêtement contient ladite résine liante (B) et ladite résine supplémentaire (C) en une proportion totale de 40 à 90 % en poids par rapport à la teneur en matières solides, et ladite silice sublimée liée en une chaîne (A) en une proportion de 60 à 10 % en poids par rapport à la teneur en matières solides, la teneur en résine (C) supplémentaire étant de 1 à 10 % en poids par rapport à la teneur en matière solides.

7. Procédé selon l'une quelconque des revendications 4 à 6, dans lequel ladite résine liante est une composition comprenant
100 parties en poids d'une résine époxy modifiée qui est obtenue en additionnant une dialcanolamine à une résine époxy de type épichlorhydrine/bisphénol A ayant un équivalent époxy de 500 à 5 000 en une proportion de 0,8 à 1,0 mole par équivalent du groupe époxy dans ladite résine époxy,
0,5 à 10 parties en poids d'un agent de couplage silane pour 100 parties en poids de la résine époxy modifiée, et
5 à 70 parties en poids d'une résine amino pour 100 parties en poids de la résine époxy modifiée.

8. Procédé selon l'une quelconque des revendications 4 à 6, dans lequel ladite résine liante est une résine époxy modifiée qui est obtenue en faisant réagir 100 parties en poids d'une résine époxy de type épichlorhydrine/bisphénol A avec 10 à 100 parties en poids d'un composé isocyanate pour former une résine époxy modifiée par un uréthane ayant un équivalent époxy de 1 000 à 5 000 et en additionnant une dialcanolamine à la résine époxy modifiée par un uréthane en une proportion de 0,5 à 1,0 mole par équivalent du groupe époxy dans ladite résine époxy modifiée par un uréthane.

9. Procédé pour préparer une bande d'acier revêtue d'un composite organique présentant une clarté d'image, une résistance à la corrosion et une adhérence de peinture secondaire après revêtement électrolytique améliorées, comprenant les étapes consistant
à former un revêtement de chromate sur une bande d'acier plaquée de zinc ou d'un alliage à base de zinc en un grammage de 5 à 500 mg/m² calculé en chrome, et
à appliquer une composition de revêtement sur le revêtement de chromate, puis à sécher pour former un revêtement de résine ayant un grammage sec de 0,1 à 3 g/m², ladite composition de revêtement contenant (A) un sol de silice dispersé dans un solvant organique ayant une taille moyenne de particule primaire de 5 à 30 nm et étant agglomérée pour former des aggrégats ayant un diamètre moyen de 100 à 2 000 nm et une surface spécifique de 50 à 800 m²/g, (B) une résine liante et (C) au moins une résine supplémentaire choisie dans le groupe constitué par une résine polyamide, une résine polyamine et une résine polyimine.

10. Procédé selon la revendication 9, dans lequel ladite composition de revêtement contient ladite résine liante (B) et ladite résine supplémentaire (C) en une proportion totale de 40 à 90 % en poids par rapport à la teneur en matières solides, et ledit sol de silice (A) en une proportion de 60 à 10 % en poids par rapport à la teneur en matières solides.

11. Procédé selon la revendication 9, dans lequel ladite composition de revêtement contient ladite résine liante (B) et ladite résine supplémentaire (C) en une proportion totale de 40 à 90 % en poids par rapport à la teneur en matières solides, et ledit sol de silice (A) en une proportion de 60 à 10 % en poids par rapport à la teneur en matières solides, la teneur en ladite résine supplémentaire (C) étant de 1 à 10 % en poids par rapport à la teneur en matières solides.

12. Procédé selon l'une quelconque des revendications 9 à 11, dans lequel ladite résine liante est une composition comprenant
100 parties en poids d'une résine époxy modifiée qui est obtenue en additionnant une dialcanolamine à une résine époxy de type épichlorhydrine/bisphénol A ayant un équivalent époxy de 500 à 5 000 en une quantité de 0,8 à 1,0 mole par équivalent du groupe époxy dans ladite résine époxy,
0,5 à 10 parties en poids d'un agent de couplage silane pour 100 parties en poids de la résine époxy modifiée, et
5 à 70 parties en poids d'une résine amino pour 100 parties en poids de la résine époxy modifiée.

13. Procédé selon l'une quelconque des revendications 9 à 11, dans lequel ladite résine liante est une résine époxy modifiée qui est obtenue en faisant réagir 100 parties en poids d'une résine époxy de type épichlorhydrine/bisphénol A avec 10 à 100 parties en poids d'un composé isocyanate pour former une résine époxy modifiée par un uréthane ayant un équivalent époxy de 1 000 à 5 000 et en additionnant une dialcanolamine à la résine époxy modifiée par un uréthane en une quantité de 0,5 à 1,0 mole par équivalent du groupe époxy dans ladite résine époxy modifiée par un uréthane.
